# EUROPEAN PATENT APPLICATION

(11) **EP 4 568 308 A1**
(43) Date of publication of application: **11.06.2025**
(21) Application number: 22954083.6
(22) Date of filing: 30.08.2022
(51) Int. Cl.: H04W 8/22, H04W 36/08

(54) **TERMINAL DEVICE, BASE STATION DEVICE, AND WIRELESS COMMUNICATION METHOD**

(30) Priority: 04.08.2022 JP 2022125073
(71) Applicant: Softbank Corp., Tokyo 105-7529 (JP)
(72) Inventor: UEMURA, Katsunari, Tokyo 105-7529 (JP)
(74) Representative: Meissner Bolte Partnerschaft mbB
(86) International application number: PCT/JP2022/032582
(87) International publication number: WO 2024/029095

(57) **Abstract**

There are provided a terminal device, a base station device, and a radio communication method which are capable of performing appropriate management including that of cell configurations which are left unused.

A terminal device (10) is a terminal device (10) for performing radio communication with a base station device (50) and includes a reception unit (11) that receives cell configuration information about cell configurations and group information indicating a group(s) of the cell configurations from the base station device (50), an execution unit (14) that executes mobility control based on L1/L2 signaling, and a management unit (15) that manages a plurality of cell configurations based on the group information and the type of the mobility control executed by the execution unit (14).

## Description

### TECHNICAL FIELD

The present invention relates to a terminal device, a base station device, and a radio communication method.

### BACKGROUND ART

The 3GPP (Third Generation Partnership Project), which is an international standardization organization, is examining NR (New Radio), which is a new radio access technology for 5G (Fifth Generation) cellular communication systems. NR is being studied as a technology for making it possible to implement a wider variety of services than LTE (Long Term Evolution)-Advanced, which is the fourth-generation cellular communication system. For example, regarding NR, implementation requirements are defined for different use scenarios, such as eMBB (enhanced Mobile Broad Band) for realizing high-speed and high-capacity communication, URLLC (Ultra-Reliable and Low Latency Communication) for realizing ultra-reliable and low-delay communication, and mMTC (massive Machine Type Communication) for realizing simultaneous connection of many Internet-of-Things (IoT) devices.

Regarding a radio access network (RAN), particularly a RAN using NR (NG-RAN [New Generation RAN]), an architecture including aggregated nodes (CUs: Central Units) and distributed nodes (DUs: Distributed Units) is defined for a base station device (gNB) which is an NR base station (see NPL 1). Moreover, in recent years, regarding NR, L1/L2-based mobility is being considered, which is a method for performing mobility control such as handover, cell selection, addition or deletion of secondary cells by using control signals which are used for communication between a terminal device(s) and a base station device(s) (hereinafter also referred to as "signaling(s)"), that is, signaling of a first layer (physical layer) of an Open Systems Interconnection (OSI) reference model (hereinafter referred to as "L1") and/or signaling of a second layer (data link layer) of the OSI reference model (hereinafter also referred to as "L2") (see NPL 2).

### CITATION LIST

### NON-PATENT LITERATURE

NPL 1: 3GPP Specifications "TS 38.401 V17.1.1 (2022-07)"
NPL 2: 3GPP Contributions "RP-221799"

However, when the mobility control (mobility procedure) is performed based on the L1/L2 signaling, it has not been clarified how to manage cell configuration information which is left unused after the completion of the executed mobility control, among a plurality of pieces of the related cell configurations (cell configuration information). As a result, for example, if all pieces of the cell configuration information which are left unused are discarded, it becomes necessary to report the cell configuration information again and there is fear that overhead of the signalings may increase. Moreover, if all the pieces of the cell configuration information which are left unused are retained, there is a possibility that the individual pieces of the cell configuration information such as dedicated RA preambles may not be released for a long period of time and there is fear that resource allocation may become insufficient. Therefore, regarding the mobility control based on the L1/L2 signaling, there is a demand for an appropriate management method including the cell configurations which are left unused.

The present invention was devised in light of the above-described circumstances and it is one of objects of the invention to provide a terminal device, a base station device, and a radio communication method which are capable of performing the appropriate management including that of the cell configurations which are left unused.

### GENERAL DISCLSURE

A terminal device according to an aspect of the present invention is a terminal device for performing radio communication with a base station device, wherein the terminal device includes: a reception unit that receives cell configuration information about cell configurations and group information indicating a group of the cell configurations from the base station device; an execution unit that executes mobility control based on L1/L2 signaling; and a management unit that manages a plurality of the cell configurations based on the group information and a type of the mobility control executed by the execution unit.

A base station device according to an aspect of the present invention is a base station device for performing radio communication with a terminal device, wherein the base station device includes: a classification unit that classifies each of a plurality of cell configurations into a group based on a cell type; a decision unit that decides management regarding the group; and a transmission unit that transmits cell configuration information about the cell configurations, group information indicating the group, and management information about the management regarding the group to the terminal device.

A radio communication method according to an aspect of the present invention is a radio communication method used for a terminal device for performing radio communication with a base station device, wherein the radio communication method includes: receiving cell configuration information about cell configurations and group information indicating a group of the cell configurations from the base station device; executing mobility control based on L1/L2 signaling; and managing a plurality of the cell configurations based on the group information and a type of the executed mobility control.

### ADVANTAGEOUS EFFECTS OF THE INVENTION

Appropriate management including that of the cell configurations which are left unused can be performed according to the present invention.

### BRIEF DESCRIPTION OF DRAWINGS

[Fig. 1] Fig. 1 is a configuration diagram illustrating an example of a schematic configuration of an information communication system according to an embodiment;
[Fig. 2] Fig. 2 is a configuration diagram illustrating an example of a hardware configuration of a terminal device and device units according to an embodiment;
[Fig. 3] Fig. 3 is a diagram for explaining an example of mobility based on the L1/L2 signaling;
[Fig. 4] Fig. 4 is a configuration diagram illustrating an example of the architecture in NG-RAN;
[Fig. 5] Fig. 5 is a diagram for explaining an example of cell configurations at the base station device;
[Fig. 6] Fig. 6 is a configuration diagram illustrating an example of a functional block configuration of the terminal device according to an embodiment;
[Fig. 7] Fig. 7 is a configuration diagram illustrating an example of a functional block configuration of the base station device according to an embodiment;
[Fig. 8] Fig. 8 is a diagram for explaining a first example of a processing sequence performed by a radio communication system according to an embodiment;
[Fig. 9] Fig. 9 is a diagram for explaining the first example of the processing sequence performed by the radio communication system according to an embodiment;
[Fig. 10] Fig. 10 is a diagram for explaining the first example of the processing sequence performed by the radio communication system according to an embodiment;
[Fig. 11] Fig. 11 is a diagram for explaining a second example of the processing sequence performed by the radio communication system according to an embodiment;
[Fig. 12] Fig. 12 is a diagram for explaining the second example of the processing sequence performed by the radio communication system according to an embodiment;
[Fig. 13] Fig. 13 is a flow chart for explaining an example of a processing sequence performed by the terminal device according to an embodiment; and
[Fig. 14] Fig. 13 is a flowchart for explaining an example of a processing sequence performed by the base station device according to an embodiment.

### DESCRIPTION OF EMBODIMENTS

Embodiments of the present invention will be described below. In the following description of the drawings, identical or similar parts are denoted by identical or similar reference numerals. However, the drawings are schematic. Therefore, specific dimensions, etc. should be determined in light of the following description. Furthermore, it is a matter of course that the drawings include parts regarding which the relationship and ratio of dimensions are different from each other. Furthermore, the technical scope of the present invention should not be understood as being limited to the embodiments.

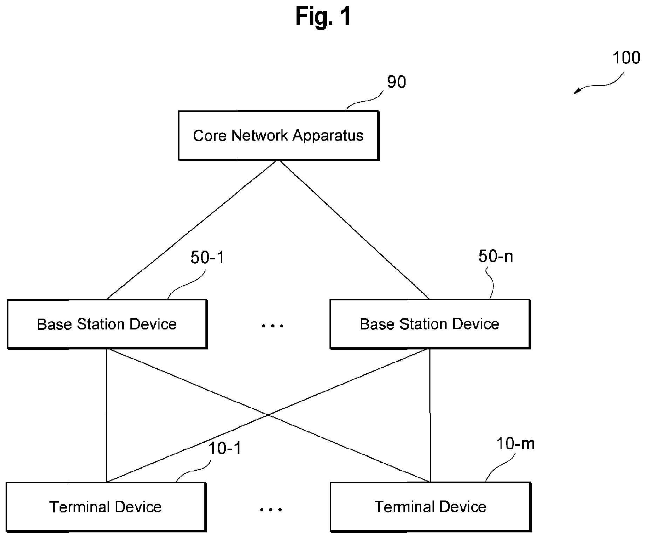

Firstly, a schematic configuration of a radio communication system according to an embodiment will be described with reference to Fig. 1. Fig. 1 is a configuration diagram illustrating an example of a schematic configuration of a radio communication system 100 according to an embodiment.

The radio communication system 100 is configured by including terminal devices 10-1 to 10-m, base station devices 50-1 to 50-n, and a core network apparatus 90 as illustrated in Fig. 1.

The radio communication system 100 is a radio communication system targeted for, for example, NR. Incidentally, the present invention is applicable to any radio communication system having at least a terminal device and a base station device and is not limited to those targeted for NR. For example, the present invention is also applicable to LTE and LTE-Advanced. It is also applicable to a radio communication system where NR is used for part of the radio communication system. LTE and LTE-Advanced will be also hereinafter referred to as E-UTRA (Evolved Universal Terrestrial Radio Access), but these meanings are the same. An area (coverage area) formed by a base station device is called a cell and E-UTRA and NR are cellular communication systems constructed by a plurality of cells. Regarding the radio communication system according to this embodiment, either a TDD (Time Division Duplex) or FDD (Frequency Division Duplex) system may be applied, and a different system may be applied to each cell.

Each of terminal devices 10-1 to 10-m wirelessly connects with one of base station devices 50-1 to 50-n. Moreover, each of the terminal devices 10-1 to 10-m may wirelessly connect with two or more of the base station devices 50-1 to 50-n simultaneously. Each of the base station devices 50-1 to 50-n may use E-UTRA or NR as a communication method. For example, the base station device 50-1 may use NR and the base station device 50-n may use E-UTRA, or vice versa. The base station device in E-UTRA will be referred to as eNB (evolved NodeB) and the base station device in NR will be referred to as gNB (g-NodeB). In the following description, when a base station device is described, it means to include both eNB and gNB. Moreover, the terminal device(s) in E-UTRA and NR will be referred to as UE (User Equipment). The base station device gNB in NR may be connected to a terminal device by using a portion of the bandwidth of the frequency band it uses (BWP: BandWidth part). In the following description, when a cell(s) is described, it includes BWP.

Incidentally, the terminal devices 10-1 to 10-m are illustrated in Fig. 1 as m terminal devices (m is an integer equal to 2 or more). In the following description, when these m terminal devices are described without distinguishing them from one another, part of the reference numerals will be omitted and they will be simply referred to as the "terminal device(s) 10." Moreover, in Fig. 1, the base station devices 50-1 to 50-n are illustrated as n base station devices (n is an integer equal to 2 or more). In the following description, when these n base station devices are described without distinguishing them from one another, part of the reference numerals will be omitted and they will be simply referred to as the "base station device(s) 50."

The terminal device 10 may be connected to the base station device 50, for example, on a cell-by-cell basis and may be connected, for example, via carrier aggregation by using a plurality of cells. When the terminal device 10 is connected via a plurality of base station devices, that is, in a case of dual connectivity, a base station device which is initially connected is called a master node (MN) and a base station device(s) which is additionally connected is called a secondary node(s) (SN). The master node may also be called a primary node (PN). The base station devices are connected by an inter-base-station interface. Moreover, the base station device 50 and a core network apparatus 90 are connected by an interface between the base station and the core network. The inter-base-station interface is used to exchange, for example, control signals necessary for a handover or a cooperative operation between base station devices.

The core network apparatus 90 has, for example, the base station devices 50 under its control and mainly manages load control between the base station devices and mobility control such as calling (paging) and location registration of the terminal device 10. NR defines an AMF (Access and Mobility Management Function) for access and mobility management and an SMF (Session Management Function) for session management as a functional group of a control plane (C-plane) in the core network apparatus 90. E-UTRA defines an MME (Mobility Management Entity) corresponding to the AMF and SMF.

Incidentally, Fig. 1 illustrates an example in which the core network apparatus 90 is composed of a single apparatus; however, the present invention is not limited to this example. For example, the core network apparatus 90 may be composed of a plurality of apparatuses including a server, a gateway, etc.

In a radio resource control (RRC) layer, the terminal device 10 and the base station device 50 transmit and receive RRC messages to proceed with session processing (also referred to as a "connection sequence"). As the session processing proceeds, the terminal device 10 changes from an idle state (RRC Idle) to a connected state (RRC Connected) of being connected with the base station device 50. The idle state corresponds to a standby status of the terminal device 10.

Moreover, the terminal device 10 and the base station device 50 transmit and receive MAC control elements (MAC CE) in a medium access control (MAC) layer. RRC messages are transmitted as RRC protocol data units (RRC PDU), and a common control channel (CCCH), a dedicated control channel (DCCH), a paging control channel (PCCH), a broadcast control channel (BCCH), or a multicast control channel (MCCH) is used as a logical channel to be mapped. A MAC CE is transmitted as a MAC PDU (or MAC subPDU). A MAC subPDU is equivalent to a service data unit (SDU) in the MAC layer plus, for example, an 8-bit header; and a MAC PDU includes one or more MAC subPDUs.

Physical channels and physical signals related to this embodiment will be described below. Of the physical channels related to the embodiment of the present invention, an explanation will be provided below about a physical broadcast channel (PBCH), a primary synchronization signal (PSS), a secondary synchronization signal (SSS), a physical random-access channel (PRACH), and a physical downlink control channel (PDCCH). Incidentally, regarding the radio communication system according to the embodiment, there also exist, other than those mentioned above, at least a physical uplink control channel (PUCCH), a physical downlink shared channel (PDSCH), a physical uplink shared channel (PUSCH), a sounding reference signal (SRS), and a demodulation reference signal (DMRS), but any detailed description about them has been omitted.

### <Physical Broadcast Channel (PBCH)>

The physical broadcast channel (PBCH) is transmitted from the base station device 50 to the terminal device 10 and is used to report common parameters (system information) in cells under the control of the base station device 50. The system information is further classified into a master information block (MIB) and a system information block (SIB). Incidentally, the system information block is further divided into SIB1, SIB2, and so on and then transmitted. The system information includes information necessary to connect to the cell, and for example, the MIB includes a system frame number and information indicating whether or not camping on to the cell is possible. Moreover, SIB1 includes parameters for calculating cell quality (cell selection parameters), channel information which is common between cells (random-access control information, PUCCH control information, and PUSCH control information), and other system information scheduling information. Moreover, the physical broadcast channel (PBCH) is periodically transmitted as a set with a synchronization signal block (SSB (or SS/PBCH)) which is composed of a primary synchronization signal (PSS) and a secondary synchronization signal (SSS). The terminal device 10 can acquire cell identifier (cell ID) information and reception timing and measure the signal quality of the relevant cell by receiving the synchronization signal block (SSB).

The system information reported by, for example, the physical broadcast channel (PBCH) is also called "system broadcast information" or "broadcast information." Moreover, the camp-on to a cell means that a terminal device 10 has completed cell selection and/or cell reselection and the terminal device 10 has entered a state of having selected a cell to monitor the system broadcast information and paging information. The terminal device 10 establishes the aforementioned RRC connection with the base station device 50 which forms the camped-on cell.

### <Primary Synchronization Signal (PSS)>

The primary synchronization signal (PSS) is used by the terminal device 10 to synchronize with a reception symbol timing and a frequency of a downstream signal of the base station device 50. The primary synchronization signal (PSS) is a signal which the terminal device 10 firstly attempts to detect in the procedure of detecting a cell of the base station device 50 (hereinafter also referred to as a "cell search procedure"). Regarding the primary synchronization signal (PSS), three types of signals from "0" to "2" are repeatedly used based on the physical cell ID. Incidentally, the physical cell ID is an identifier of a physical cell, and 504 types of IDs are used in E-UTRA and 1008 types of IDs are used in NR.

### <Secondary Synchronization Signal (SSS)>

The secondary synchronization signal (SSS) is used by the terminal device 10 to detect the physical ID of the base station device 50. Specifically, the secondary synchronization signal (SSS) is a signal used by the terminal device 10 to detect the physical cell ID in the cell search procedure. Regarding the secondary synchronization signal (SSS), 168 types of signals from "0" to "167" are repeatedly used in E-UTRA and 336 types of signals from "0" to "335" are repeatedly used in NR based on the physical cell ID.

### <Physical Random-Access Channel (PRACH)>

The physical random-access channel (PRACH) is used by the terminal device 10 to transmit a random-access preamble to the base station device 50. The physical random-access channel (PRACH) is generally used in a state where uplink synchronization is not established between the terminal device 10 and the base station device 50; and is used for transmission timing adjustment information (timing advance) and uplink radio resource requests. Information indicating a radio resource capable of transmitting the random-access preamble is transmitted to the terminal device 10 by using broadcast information and RRC messages.

### <Physical Downlink Control Channel (PDCCH)>

The physical downlink control channel (PDCCH) is transmitted from the base station device 50 to notify the terminal device 10 of downlink control information (DCI). The downlink control information includes uplink radio resource information (uplink grant (UL grant)) or downlink radio resource information (downlink grant (DL grant)) which can be used by the terminal device 10. The downlink grant is information indicating scheduling of a physical downlink data shared channel (PDSCH). The uplink grant is information indicating scheduling of a physical uplink shared channel (PUSCH). When the physical downlink control channel (PDCCH) is transmitted in response to the random-access preamble, the physical downlink data shared channel (PDSCH) indicated by the physical downlink control channel (PDCCH) is a random-access response and includes, for example, index information of the random-access preamble, transmission timing adjustment information, and uplink grant.

### <Hardware Configuration>

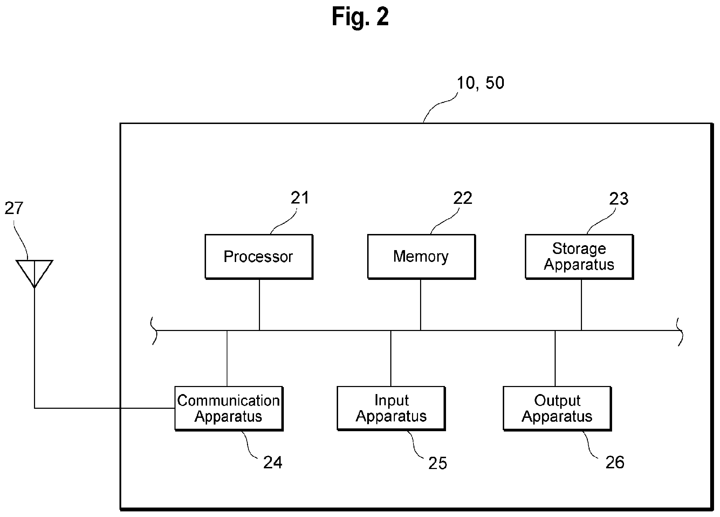

Next, a hardware configuration of the terminal device and the base station device according to an embodiment will be described with reference to Fig. 2. Fig. 2 is a configuration diagram illustrating an example of the hardware configuration of the terminal device 10 and the base station device 50 according to an embodiment.

Referring to Fig. 2, each of the terminal device 10 and the base station device 50 includes, for example, a processor 21, a memory 22, a storage apparatus 23, a communication apparatus 24, an input apparatus 25, an output apparatus 26, and an antenna 27.

The processor 21 is configured to control the operation of the respective units of the terminal device 10 or the base station device 50. The processor 21 is configured by including, for example, integrated circuits such as a CPU (Central Processing Unit), a DSP (Digital Signal Processor), an APU (Accelerated Processing Unit), an ASIC (Application Specific Integrated Circuit), a PLD (Programmable Logic Device), an FPGA (Field Programmable Gate Array), and an SoC (System-on-a-chip).

Each of the memory 22 and the storage apparatus 23 is configured to store programs, data, and so on. The memory 22 is configured from, for example, a ROM (Read Only Memory), an EPROM (Erasable Programmable ROM), an EEPROM (Electrically Erasable Programmable ROM), and/or a RAM (Random Access Memory). The storage apparatus 23 is configured from, for example, storage such as an HDD (Hard Disk Drive), an SSD (Solid State Drive), and/or an eMMC (Embedded Multi-Media Card).

The communication apparatus 24 is configured to perform communication via a wired and/or radio network. The communication apparatus 24 is configured by including, for example, a network card, and a communication module. Moreover, the communication apparatus 24 may be also configured by including an amplifier, an RF (Radio Frequency) apparatus that performs processing related to a radio signal, and a BB (BaseBand) apparatus that performs baseband signal processing.

For example, the RF apparatus performs D/A (Digital-to-Analog) conversion, modulation, frequency conversion, power amplification, etc. on a digital baseband signal received from the BB apparatus to generate a radio signal to be transmitted from the antenna 27. Moreover, the RF apparatus performs frequency conversion, demodulation, A/D (Analog to Digital) conversion, etc. on the radio signal received from the antenna 27 to generate a digital baseband signal and transmit it to the BB apparatus. The BB apparatus performs processing for converting the digital baseband signal into an IP packet(s) and processing for converting the IP packet(s) into the digital baseband signal.

The input apparatus 25 is configured to input information by a user's operation. The input apparatus 25 is configured by including, for example, a keyboard, a touch panel, a mouse, and/or a microphone.

The output apparatus 26 is configured to output information. The output apparatus 26 is configured by including, for example, a display apparatus such as a liquid crystal display, an EL (Electro Luminescence) display, or a plasma display, and/or a speaker.

The antenna 27 is configured to be capable of emitting (radiating) and receiving electric waves (electromagnetic waves) in one or a plurality of specified frequency bands. The antenna 27 may be non-directional, that is, may not have directionality. The non-directional antenna 27 has substantially the same gain from all 360-degree directions in a horizontal plane, in a vertical plane, or in both horizontal and vertical planes.

Incidentally, the antenna 27 is not limited to a single antenna. When the base station device 50 includes a plurality of antennas, for example, they may be divided into transmission antennas and reception antennas. Moreover, when the plurality of antennas are divided into the transmission antenna(s) and the reception antenna(s), at least either of them may include a plurality of antennas. Incidentally, when the base station device 50 includes a plurality of transmission and reception antennas or a plurality of transmission antennas, a beam forming technology described later can be used.

Moreover, the terminal device 10 and the base station device 50 may further include at least one of, for example, a global positioning system (GPS) receiver, various sensors such as an orientation sensor, a gravity sensor, a temperature sensor, and an acceleration sensor, various biometric authentication functions using, for example, a fingerprint(s), a retina(s), an iris(es), a face, and a voiceprint, various devices such as a camera, a microphone, a speaker, and a light, and an input/output interface including a connection terminal, although these are not illustrated in the drawing.

### <Outline of L1/L2-Based Mobility >

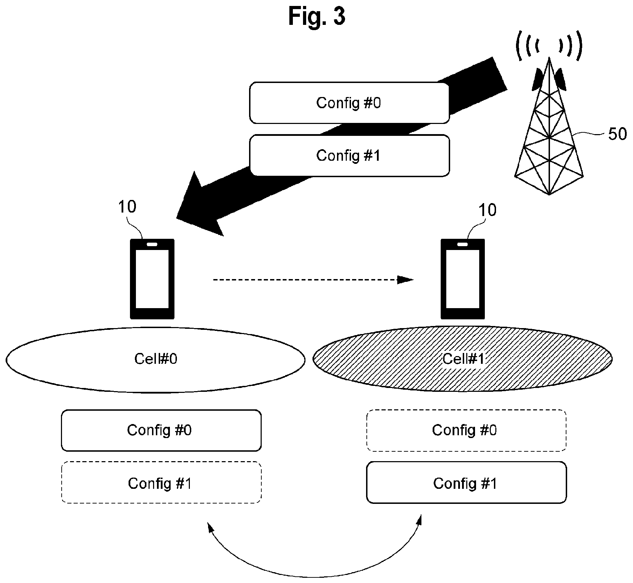

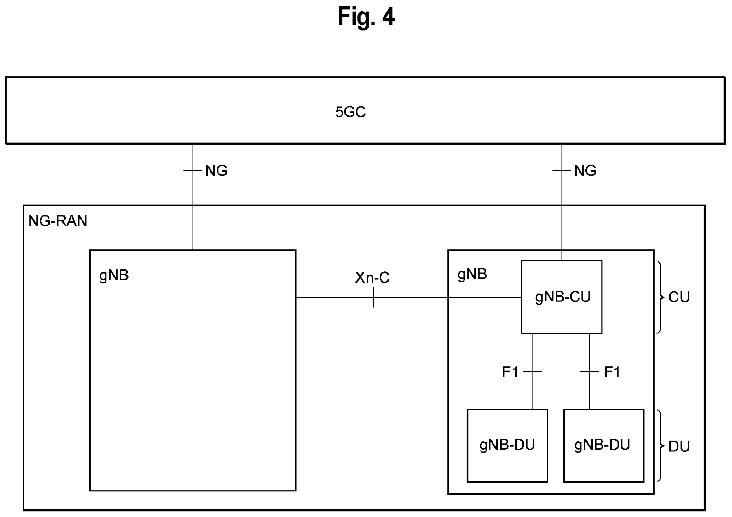

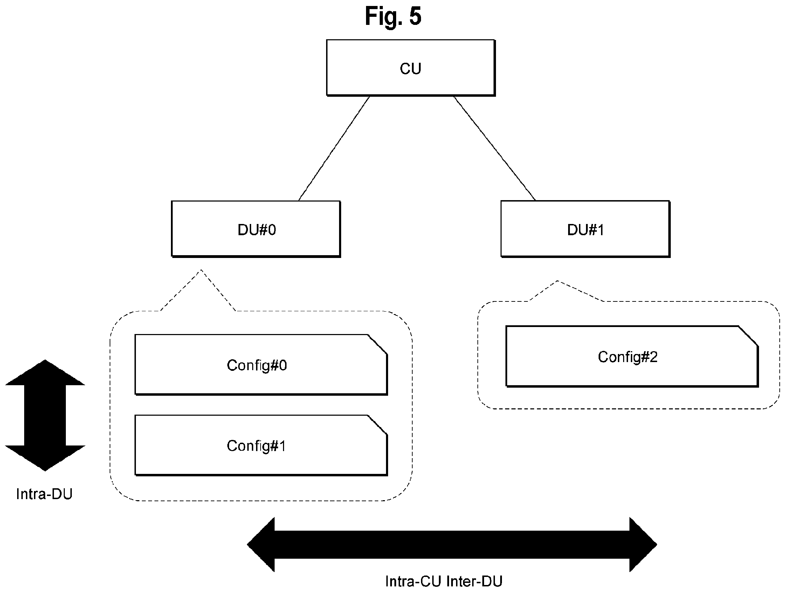

Next, the outline of the L1/L2-based mobility will be explained with reference to Fig. 3 to Fig. 5. Fig. 3 is a diagram for explaining an example of the mobility based on the L1/L2 signaling. Fig. 4 is a configuration diagram illustrating an example of the architecture in the NG-RAN. Fig. 5 is a diagram for explaining an example of cell configurations regarding the L1/L2 signaling at the base station device 50.

Referring to Fig. 3, with the mobility based on the L1/L2 signaling, the base station device 50 notifies the terminal device 10 of cell configuration information about candidate cells, which are connection point candidates, in advance. The cell configuration information is information about the configuration for communication by using the relevant cell (hereinafter also referred to as "cell configuration"). Moreover, the cell configuration information is normally reported regarding a plurality of candidate cells. In the example illustrated in Fig. 3, the cell configuration information "Config #0" of a candidate cell "Cell #0" and the cell configuration information "Config #1" of a candidate cell "Cell #1" are reported. The cell configuration information is a set of information parameters to be applied to cause the base station device 50 and the terminal device 10 to perform communication within a certain cell and includes, for example, at least some of the frequency, cell ID, bandwidth, a reference signal pattern, a control channel area, the number of MIMO layers, physical downlink information, physical uplink information, measurement control information, timing information, and transmission power information.

As a result of the movement of the terminal device 10, for example, if the terminal device 10 moves from inside the area of the candidate cell "Cell #0" and enters the area of the candidate cell "Cell #1," handover is executed. When this happens, the base station device 50 transmits the L1 signaling or the L2 signaling to the terminal device 10. The L1 signaling is, for example, a physical downlink control channel (PDCCH). The L2 signaling is, for example, a MAC control element (MAC CE), but without limitation to this example.

The terminal device 10 changes the cell configuration to that according to the cell configuration information "Config #1" based on the control information included in these signalings and switches a connection point from the candidate cell "Cell #0" to the candidate cell "Cell #1" (in other words, an individual configuration which is set to continue the communication at Cell #1 is applied). Moreover, the handover is executed in a similar procedure also in a case where the terminal device 10 moves from inside the area of the candidate cell "Cell #1" into the area of the candidate cell "Cell #0." The handover based on the L1/L2 signaling is executed in the above-described manner. At least one of the L1 signaling and the L2 signaling is referred to as, or both of them are collectively referred to as, the L1/L2 signaling and the mobility procedure based on the L1/L2 signaling is referred to as the L1/L2-based mobility.

Incidentally, the handover based on the L1/L2 signaling, that is, the L1/L2-based mobility is not limited to the case illustrated in Fig. 3. For example, the L1/L2-based mobility may be used when making changes including the cell configuration of a secondary cell (SCell) or a special cell (SpCell) which is a combination of a primary cell (PCell) and a primary secondary cell (PSCell), with regard to a carrier aggregation technology for simultaneous transmission/reception using a plurality of carriers (a plurality of cells) or a dual connectivity technology for transmission/reception by binding carriers (cells) between a plurality of base station devices. Furthermore, the L1/L2-based mobility indicates not only the case of switching the cell to be connected, but also the case of switching the configuration within the cell. Moreover, the cell to be connected may be a cell with the same frequency or a cell with a different frequency, and the number of cells may be changed before and after the switching.

Moreover, the cell change is normally triggered by wireless communication quality information about wireless communication quality measured by the terminal device 10. The wireless communication quality is measured based on, for example, a synchronization signal (PSS, SSS) or a CSI-RS (Channel State Information-Reference Signal) which is a downlink reference signal. The wireless communication quality information includes at least one of, for example, RSRP (Reference Signal Received Power) indicating a received power value at the terminal device 10, RSSI (Received Signal Strength Indication) indicating received signal strength, RSRQ (Reference Signal Received Quality) indicating received power quality, and an SINR (Signal to Interference Noise Ratio) indicating a signal-to-interference noise ratio with respect to a signal(s) transmitted by the cell formed by the base station device 50. With the L1/L2-based mobility, the terminal device 10 may be based on L1 measurement and/or L2 measurement as the above-listed wireless communication quality information. The base station device 50 may report the wireless communication quality information used by the terminal device 10 via broadcast information or an individual RRC message.

In an NG-RAN (New Generation RAN) using NR as illustrated in Fig. 4, each base station device (gNB) may include an aggregated node (CU) and a distributed node(s) (DU). Regarding the base station device (gNB), one or a plurality of distributed nodes (DU) may be connected to one aggregated node (CU). An interface between base station devices is an Xn-C interface and an interface between a 5G Core (5GC) and a base station device is an NG interface. Incidentally, a gNB-CU may be further configured to be separated into gNB-CU-CP which is a control plane, and gNB-CU-UP which is a user plane.

Each distributed node (DU) forms one or a plurality of cells as illustrated in Fig. 5. In an example illustrated in Fig. 5, a distributed node "DU #0" forms two cells, that is, a cell whose cell configuration information is "Config #0" and a cell whose cell configuration information is "Config #1." On the other hand, a distributed node "DU #1" forms a cell whose cell configuration information is "Config #2." The cells with Config #0 and Config #1 may have the same frequency or different frequencies.

Accordingly, the cell change(s) in the NG-RAN occurs between different cells at the same distributed node (Intra-DU Inter-Cell) or between different nodes at the same aggregated node (Intra-CU Inter-DU).

### <Functional Block Configuration>

### (Terminal Device)

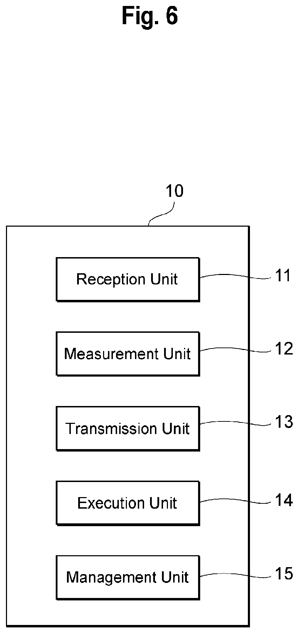

Next, a functional block configuration of a terminal device according to an embodiment will be described with reference to Fig. 6. Fig. 6 is a configuration diagram illustrating an example of the functional block configuration of the terminal device 10 according to an embodiment. Incidentally, Fig. 6 is intended to illustrate functional blocks required in this embodiment and it does not eliminate a case where the terminal device 10 includes functional blocks other than those illustrated.

The terminal device 10 includes, as illustrated in Fig. 6, a reception unit 11, a measurement unit 12, a transmission unit 13, an execution unit 14, and a management unit 15 as functional blocks.

The reception unit 11 is configured to receive the cell configuration information about the cell configurations and the group information indicating a group(s) of the cell configurations from the base station device 50. The reception unit 11 may receive the cell configuration information and the group information together or separately.

Each of the plurality of the cell configurations is classified into a group based on its cell type. The group classification is performed by the base station device 50. The group information is letters, symbols, numbers, or a combination thereof indicating the relevant group. Specifically, the group information is an identifier like a group index described later. The base station device 50 transmits the group information by, for example, including it in an RRCReconfiguration message which is a configuration signal of a radio resource and the reception unit 11 receives the group information by receiving this message from the base station device 50.

The measurement unit 12 is configured to measure the wireless communication quality of the cell with the cell configuration received by the reception unit 11. The measurement of the wireless communication quality is performed based on, for example, the synchronization signal (PSS, SSS) or the CSI-RS as described earlier. Moreover, the wireless communication quality to be measured is at least one of, for example, the RSRP, the RSSI, the RSRQ, and the SINR mentioned earlier. The measured wireless communication quality is transmitted and reported by the transmission unit 13 to the base station device 50.

The execution unit 14 is configured to execute the mobility control based on the L1/L2 signaling. More specifically, the execution unit 14 is configured to, when receiving the L1/L2 signaling, control the aforementioned L1/L2-based mobility between the relevant terminal 10 and the base station device 50 based on the control information included in these signalings. When the mobility control by means of the L1/L2 signaling is executed by the execution unit 14, for example, the handover is performed from the cell which is currently connected to a new connection point cell as described earlier.

The management unit 15 is configured to manage the plurality of the cell configurations based on the group information received by the reception unit 11 and the type of the mobility control executed by the execution unit 14. More specifically, the management unit 15 is configured to manage the plurality of the cell configurations with respect to each group. The management unit 15 can autonomously manage the plurality of the cell configurations with respect to each group on the basis of the group information received by the reception unit 11 and the type of the mobility control executed by the execution unit 14.

Accordingly, the terminal device 10 manages the plurality of the cell configurations based on the group information and the type of the mobility control and it thereby becomes possible to manage the plurality of the cell configurations with respect to each group to which each of the cell configurations belongs according to the type of the executed mobility control. Therefore, the cell configurations can be managed appropriately as compared to conventional technologies.

Specifically, the management unit 15 retains or releases the information of the plurality of the cell configurations, that is, the plurality of pieces of the cell configuration information based on the group information received by the reception unit 11 and the type of the mobility control executed by the execution unit 14. Accordingly, it is possible to suppress the signaling overhead and prevent the resource occupancy of the individual cell configurations.

Moreover, the management unit 15 may be configured to manage the plurality of the cell configurations based on the measurement result by the measurement unit 12 in addition to the group information and the type of the mobility control. Accordingly, it becomes possible to manage the plurality of the cell configurations with respect to each group and according to the measured wireless communication quality. Therefore, the cell configurations can be managed even more appropriately as compared to conventional technologies.

Incidentally, the reception unit 11 and the transmission unit 13 may be implemented by, for example, the antenna 27 and the communication apparatus 24 or may be implemented by the processor 21 in addition to the communication apparatus 24 by executing a program(s) stored in the storage apparatus 23. The measurement unit 12, the execution unit 14, and the management unit 15 may be implemented by the processor 21 by executing a program(s) stored in the storage apparatus 23. When executing a program, the program may be stored in a storage medium. The storage medium storing the relevant program may be a non-transitory computer-readable storage medium. The non-transitory storage medium is not particularly limited, but may be, for example, a storage medium such as a USB (Universal Serial Bus) memory or a CD-ROM (Compact Disc ROM).

### (Base Station Device)

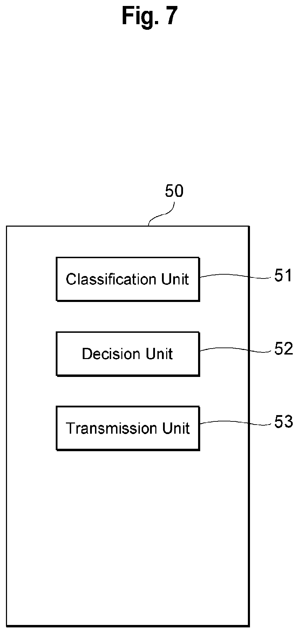

Next, a functional block configuration of the base station device according to an embodiment will be described with reference to Fig. 7. Fig. 7 is a configuration diagram illustrating an example of the functional block configuration of the base station device 50 according to an embodiment. Incidentally, Fig. 7 is to show functional blocks required in this embodiment and it does not eliminate a case where the base station device 50 includes functional blocks other than those illustrated.

The base station device 50 includes, as illustrated in Fig. 7, a classification unit 51, a decision unit 52, and a transmission unit 53 as functional blocks.

The classification unit 51 is configured to classify each of the plurality of the cell configurations into a group based on the cell type. Specifically speaking, each cell configuration is grouped into any one of a plurality of groups according to the cell type of the relevant cell configuration. The basis for the classification is, for example, whether it is the same cell (Intra-cell) or not, whether it is a cell at the same distributed node (Intra-DU Cell) or not, or whether it is a cell at the same aggregated node (Intra-CU Cell) with respect to the relevant cell with the cell configuration which is currently set.

The decision unit 52 is configured to decide the management regarding the groups classified by the classification unit 51. The decision unit 52 may decide the management regarding each of the plurality of groups or may decide the management regarding some of the plurality of groups.

The management regarding the groups is decided according to various viewpoints, bases, and elements. For example, the decision unit 52 may be configured to decide the management regarding the groups when the mobility control based on the L1/L2 signaling occurred at the terminal device 10.

Moreover, the management regarding the groups includes, for example, management to activate the cell configurations belonging to the relevant group (Activate) or to deactivate the cell configurations belonging to the relevant group (Deactivate). Alternatively, the management regarding the groups may include management to keep the relevant cell configuration information (Keep) or release (Delete, Release) the relevant cell configuration information with respect to one or a plurality of the cell configurations classified into the relevant group.

Incidentally, when the base station device 50 includes the decision unit 52, the terminal device 10 does not have to include the aforementioned management unit 15. Conversely, when the terminal device 10 includes the aforementioned management unit 15, the base station device 50 does not have to include the decision unit 52. In other words, it would be sufficient if either the management unit 15 for the terminal device 10 or the decision unit 52 for the base station device 50 served its function (role).

The transmission unit 53 is configured to transmit the group information indicating the group(s) of the cell configuration information about the cell configuration(s) and the management information about the management regarding the group(s) to the terminal device 10. The transmission unit 53 may transmit the cell configuration information, the group information, and the management information, respectively, or may transmit at least some of these pieces of information together. The transmission unit 53 may transmit, for example, the group information by including it in an RRCReconfiguration message as mentioned earlier.

Accordingly, the base station device 50 transmits the cell configuration information, the group information, and the management information to the terminal device 10 and it thereby becomes possible to cause the terminal device 10 to manage the plurality of the cell configurations with respect to each group to which each of the cell configurations belongs in accordance with the decided management. Therefore, the cell configurations can be managed appropriately as compared to conventional technologies.

Moreover, when the mobility control based on the L1/L2 signaling is implemented at the terminal device 10, the terminal device 10 is caused to decide the management regarding the group, so it is thereby possible to cause the terminal device 10 to decide the management of the cell configurations belonging to the relevant group with respect to each group according to the type of the mobility control which has occurred.

Furthermore, the management information transmitted by the transmission unit 53 may include, for example, the activation information for activating the cell configurations belonging to the relevant group or the deactivation information for deactivating the cell configurations belonging to the relevant group. Accordingly, the cell configurations can be activated or deactivated with respect to each group.

Incidentally, the transmission unit 53 may be implemented by, for example, the communication apparatus 24 or may be implemented by the processor 21 in addition to the communication apparatus 24 by executing a program(s) stored in the storage apparatus 23. The classification unit 51 and the decision unit 52 may be implemented by the processor 21 by executing a program(s) stored in the storage apparatus 23. When executing a program, the program may be stored in a storage medium. The storage medium storing the relevant program may be a non-transitory computer-readable storage medium. The non-transitory storage medium is not particularly limited, but may be, for example, a storage medium such as a USB memory or a CD-ROM.

### <Processing Sequences>

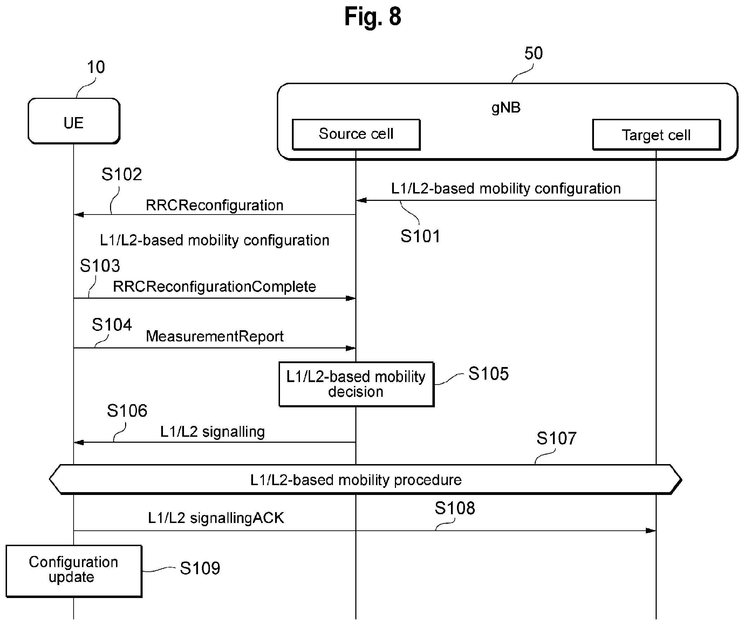

Next, a processing sequence performed by the radio communication system according to an embodiment will be described with reference to Figs. 8 to 12.

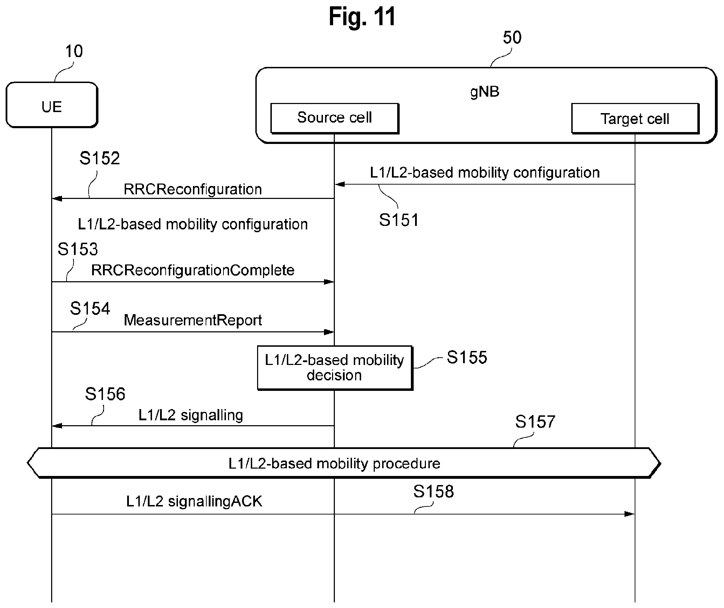

Fig. 8 to Fig. 10 are diagrams for explaining a first example of a processing sequence performed by the radio communication system according to an embodiment. Fig. 11 to Fig. 12 are diagrams for explaining a second example of a processing sequence performed by the radio communication system according to an embodiment. In Fig. 8 to Fig. 12, for the sake of simplification of explanation, of the processing sequence of the radio communication system 100 illustrated in Fig. 1, an explanation will be provided mainly about a processing sequence between the base station device 50 and the terminal device 10, and an explanation about the processing sequence between the base station device 50 and the core network apparatus 90 will be omitted. Moreover, in Fig. 8 and Fig. 11, the terminal device 10 is denoted as "UE," the base station device 50 is denoted as "gNB," one of a plurality of cells formed by the base station device 50 is denoted as a "Source Cell," and one of the plurality of cells other than the above-mentioned cell is also denoted as a "Target Cell."

### (First Example of Processing Sequence)

Referring to Fig. 8, when the cell configuration information about the cell configuration of the "Target Cell" (L1/L2-based mobility configuration), among a plurality of candidate cells, is reported from a distributed node (DU) of the "Target Cell" to a distributed node (DU) of the "Source Cell" (step S101), the reception unit 11 for the terminal device 10 receives that cell configuration information and the group information about the group of the cell configurations from the base station device 50 (step S102). The cell configuration information of the candidate cell is included in, for example, an RRCReconfiguration message and is then transmitted. Incidentally, it is also possible to use RRC messages other than the RRCReconfiguration message (for example, RRCSetup, RRCResume, and RRCReestablishment).

Moreover, in the first example, the cell configurations of the respective candidate cells are classified into some groups with respect to each relevant cell type. In the example illustrated in Fig. 8, each cell configuration belongs to, for example, any one of the following three groups.
"G1": (Intra-cell) Configuration Change
"G2": Intra-DU Cell Change
"G3": Inter-DU Cell Change

The classification unit 51 for the base station device 50 in the first example forms groups of the plurality of the cell configurations based on the relationship with cells existing in a service area with respect to the terminal device 10. Then, the classification unit 51 for the base station device 50 adds information for causing the terminal device 10 to identify each group (for example, "G1," "G2," or "G3") as the group information and stores it. The transmission unit 53 for the base station device 50 transmits the added group information to the terminal device 10. The transmission unit 53 for the base station device 50 may transmit the group information together with the cell configuration information (L1/L2-based mobility configuration) to the terminal device 10 or may include the group information in the RRC message and transmit it to the terminal device 10 separately from the cell configuration information (L1/L2-based mobility configuration). The base station device 50 may further report an ID indicating a link to the cell configuration information and the group information and set the association between the cell configuration information and the group information by adding, deleting, or changing the ID.

Incidentally, the group of each cell configuration and its group information are not limited to the case where they are decided and explicitly reported by the base station device 50. For example, regarding the Configuration Change, if the terminal device 10 is the same as the cell which is being connected with respect to the frequency and the cell ID of the relevant cell, or if the terminal device 10 does not include such information, it may be determined (judged, decided, or identified) that the group information of the terminal device 10 in the first example is "G1." Alternatively, if the terminal device 10 in the first example receives a notice of the cell configuration information of the conventional Intra-cell, it may determine that it is the group information "G1"; and the terminal device 10 may implicitly determine according to additional information such as the frequency that it is the group information "G2" or the group information "G3." For example, if different frequency information is set, the terminal device 10 may determine that it is the group information "G2"; and if different frequency information and cell ID are set, the terminal device may determine that it is the group information "G3."

Next, the terminal device 10 transmits an RRCReconfigurationComplete message, which is a completion notice corresponding to the RRCReconfiguration message, to the base station device 50 (step S103). Then, the measurement unit 12 for the terminal device 10 measures the wireless communication quality between itself and the current cell "Source Cell" and the measurement unit 12 includes the measurement result in a MeasurementReport message and reports (transmits) it to the base station device 50 (step S104). The measurement result may be triggered based on a measurement event prepared for the L1/L2-based Mobility or may be reported periodically, or a measurement trigger condition (for example, Event-A3) for a conventional L3 measurement may be reused. Regarding the wireless communication quality, the RSRP may be used or a measured value of, for example, the RSRQ may be used. Moreover, a synchronization signal (PSS/SSS) may be used as a downlink physical signal to be used for the measurement, or the CSI-RS may be used. The downlink physical signal to be used for the measurement may be designated by the base station device 50 with respect to each group or each cell. The base station device 50 judges the occurrence of the mobility event based on this measurement report (step S105).

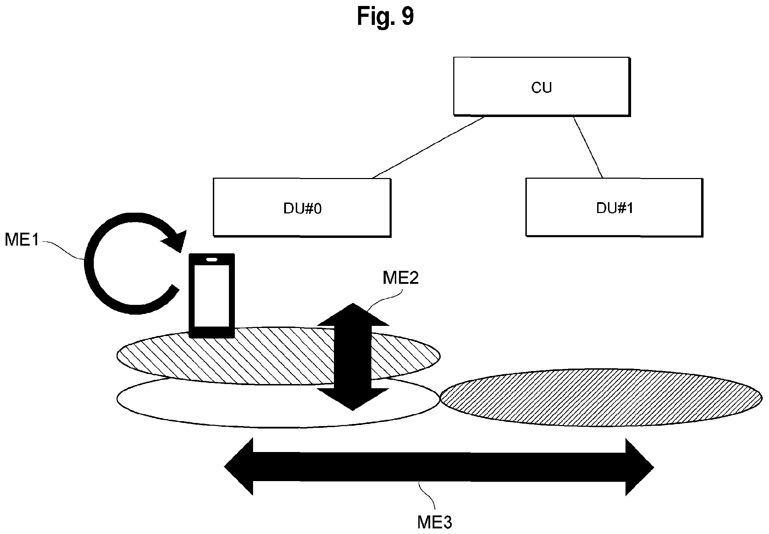

There are, for example, the following three mobility events judged by the base station device 50 as illustrated in Fig. 9.
"ME1": cell configuration information (Configuration) change within the same cell
"ME2": cell change within the same distributed node
"ME3": cell change between different distributed nodes

If it is determined as a result of the judgment in step S105 that the mobility event has occurred, the base station device 50 in the first example notifies the terminal device 10 of the L1/L2 signaling (step S106). This L1/L2 signaling includes information for identifying at least target cell information (or cell configuration information) as mobility event information corresponding to the mobility event which is determined to have occurred.

Incidentally, in step S106, when the base station device 50 in Embodiment 1 notifies the terminal device 10 of the L1/L2 signaling indicating the mobility event information "ME3," that is, the mobility event information corresponding to the cell change between different distributed nodes (Inter-DU cell Change), it may also notify the terminal device 10 of radio resource information like a dedicated RA preamble to be used at the relevant mobility event (the cell configuration information) at the same time. In this case, it is possible that a new DCI (Downlink Control Indicator) format for the physical downlink control channel (PDCCH) may be introduced and the notification may be performed by using part of bits in that format. Moreover, such a configuration may be employed so that the terminal device 10 is notified of a plurality of pieces of radio resource information in advance by using an RRC message (for example, RRCReconfiguration) and is notified of the identifier for identifying the radio resource information to be applied in the DCI format in the L1/L2 signaling (PDCCH). Alternatively, such a configuration may be employed so that the identifier indicating the radio resource information to be applied may be reported by using the L1/L2 signaling (MAC CE). When the mobility event is completed, the terminal device 10 may release (Delete, Release) the designated radio resource information (the cell configuration information).

Next, the execution unit 14 for the terminal device 10 in the first example executes the mobility control based on the L1/L2 signaling between itself and the candidate cell "Target Cell" (step S108). Specifically speaking, the procedure (Procedure, processing sequence) for the L1/L2-based mobility is performed. After the L1/L2-based mobility procedure is completed, the terminal device 10 notifies the "Target Cell" which is a new connection point, of an ACK message (step S108).

If the L1/L2-based mobility procedure is performed successfully with respect to the cell change (Inter-DU cell Change) between the different distributed nodes, the terminal device 10 in Embodiment 1 may change the group information of a cell group whose group information is "G3," that is, the cell configuration for which the Inter-DU Cell Change is designated, and which is the same group as that of the Target Cell, to "G2," that is, the Intra-DU Cell Change. Similarly in the opposite case, the group information of the cell configuration whose group information is "G2," that is, the cell configuration for which the Intra-DU Cell Change is designated, may be changed to "G3," that is, the Inter-DU Cell Change.

Then, after the completion of the L1/L2-based mobility procedure, the management unit 15 for the terminal device 10 in the first example manages the cell configurations of the plurality of candidate cells on a group basis (step S109). The management of the cell configurations is performed based on the group information and the mobility event information which are received from the base station device 50. The management of the cell configurations includes, for example, retaining, releasing, and changing the cell configuration information.

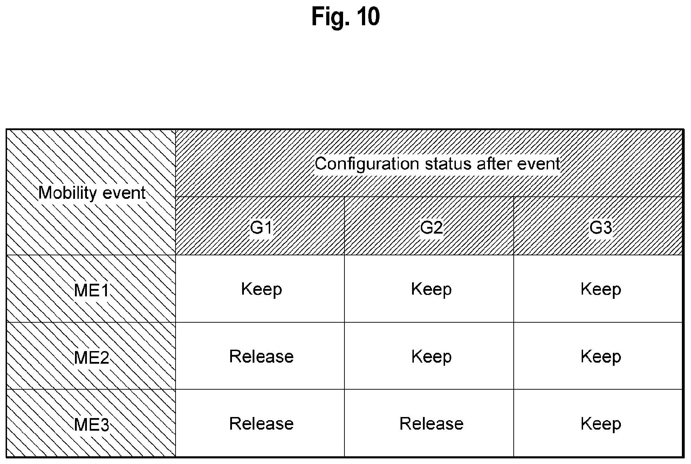

For example, the management unit 15 for the terminal device 10 may store a management table illustrated in Fig. 10 in, for example, the memory 22 or the storage apparatus 23 and may manage the cell configurations in the management table. If the mobility event information is "ME1," the relevant cell configuration information is retained (Maintain, Keep) regarding any one of the group information "G1," "G2," and "G3" of the cell configurations. Moreover, if the mobility event information is "ME2," the cell configuration information whose group information is "G1" is released (Delete, Release) and the cell configuration information whose group information is "G2" or "G3" is retained (Keep). Furthermore, if the mobility event information is "ME3," the cell configuration information whose group information is "G1" or "G2" is released (Release) and the cell configuration information whose group information is "G3" is retained (Keep). Moreover, the terminal device 10 may store information and judgment procedures which can obtain the management results similar to those of Fig. 10.

Incidentally, the judgment made at the terminal device 10 on whether to retain or release the cell configuration information is not limited to the case where it is based on the group information and the mobility event information. The management unit 15 for the terminal device 10 in the first example may consider the wireless communication quality measured based on the synchronization signal (SS) or the CSI-RS in addition to the group information and the mobility event information. For example, the management unit 15 for the terminal device 10 may be designed to: retain only the cell configuration information of the cell(s) whose wireless communication quality is equal to or higher than a specified quality, among the cell configurations belonging to the group(s) which are judged to be retained based on the group information and the mobility event information; and release the cell configuration information of the cell(s) whose wireless communication quality is lower than the specified quality. A threshold value indicating the specified quality may be designated by the base station device 50. Moreover, the synchronization signal or the CSI-RS to be used for the measurement may be designated by the base station device 50.

### (Second Example of Processing Sequence)

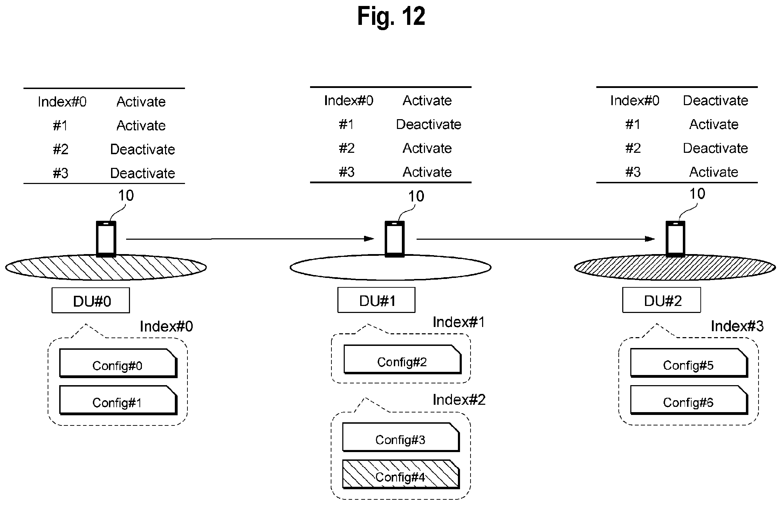

In an example illustrated in Fig. 11 and Fig. 12, the base station device (gNB) includes three distributed nodes (DU), that is, "DU #0," "DU #1," and "DU #2."

Incidentally, step S151 indicated in Fig. 11 is the same or substantially the same as step S101 indicated in Fig. 8 described earlier, step S153 through step S155 are the same or substantially the same as step S103 through step S105 indicated in Fig. 8 described earlier, and step S157 through step S158 are the same or substantially the same as step S107 through step S108 indicated in Fig. 8 described earlier, respectively, so an explanation about each of the above steps will be omitted as necessary.

Referring to Fig. 11, after the cell configuration information about the cell configuration of the "Target Cell" (L1/L2-based mobility configuration) is reported at the base station device 50 in step S151, the transmission unit 53 transmits the cell configuration information and the group information about the group, which is classified by the classification unit 51, to the terminal device 10 (step S152). In the second example similarly to the first example, the cell configuration information is included in an RRCReconfiguration message and transmitted.

The group information transmitted by the transmission unit 53 for the base station device 50 in the second example is an index which is set to each group and is a group index indicating the relevant group.

Referring to Fig. 12, the classification unit 51 for the base station device 50 in the second example causes a plurality of cell configurations to form any one of a plurality of groups in a manner similar to the second example. Then, the base station device 50 sets the group index to each group and the transmission unit 53 for the base station device 50 notifies the terminal device 10 of the group index. In an example illustrated in Fig. 12, the group index "Index #0" is assigned to two pieces of cell configuration information "Config #0" and "Config #1" of the distributed node (DU) "DU #0." Moreover, of the three pieces of cell configuration information of the distributed node (DU) "DU #1," the group index "Index #1" is assigned to one piece of the cell configuration information "Config #2" and the group index "Index #2" is assigned to two pieces of the cell configuration information "Config #3" and "Config #3," respectively. Furthermore, the group index "Index #3" is assigned to two pieces of cell configuration information "Config #5" and "Config #6" of the distributed node (DU) "DU #2." The transmission unit 53 for the base station device 50 may transmit the set group indexes, together with the cell configuration information (L1/L2-based mobility configuration), to the terminal device 10 or may transmit the set group indexes, separately from the cell configuration information (L1/L2-based mobility configuration), to the terminal device 10 by including the set group indexes in the RRC message. The base station device 50 may further report an ID indicating a link to the cell configuration information and the group index and may set the association between the cell configuration information and the group indexes by adding, deleting, or changing the ID.

Moreover, if it is determined as a result of the judgment in step S155 that the mobility event has occurred, the base station device 50 in the second example notifies the terminal device 10 of the L1/L2 signaling (step S156). This L1/L2 signaling includes information for identifying at least target cell information (or cell configuration information) as mobility event information corresponding to the mobility event which is determined to have occurred.

When this happens, the decision unit 52 for the base station device 50 decides the management regarding the relevant group of the cell configurations and the transmission unit 53 for the base station device 50 transmits the management information about the management regarding the decided group to the terminal device.

Accordingly, the base station device 50 in the second example decides (controls) the management of the cell configurations of the plurality of candidate cells and the terminal device 10 in the second example manages the cell configurations based on the decision (control) by the base station device 50. The management of the cell configuration information in the second example is performed in a manner similar to the first example at the terminal device 10 when the mobility event has occurred, or is performed at the terminal device 10 individually when the notification is made by the PDCCH or the MAC control element (MAC CE).

More specifically, the decision unit 52 for the base station device 50 designates each group indicated by the group index of the cell configuration to activate (Activation) or deactivate (Deactivation). The decision unit 52 for the base station device 50 notifies the terminal device 10 of the designated Activation/Deactivation via the L1/L2 signaling. Then, the terminal device 10 activates (Activate) or deactivates (Deactivate) the cell configurations included in the relevant group on the basis of the Activation/Deactivation designated for each group.

Incidentally, whether the cell configuration should be activated or deactivated is not limited to the case where it is based on the designated Activation/Deactivation. The terminal device 10 in the second example may consider the wireless communication quality based on the synchronization signal (SS) or the CSI-RS. For example, of the cell configuration information belonging to the group designated to be activated (Activation), only the cell configuration information whose wireless communication quality is equal to or higher than a specified quality may be activated (Activation), and the cell configuration information whose wireless communication quality is lower than the specified quality may be deactivated (Deactivation). A threshold value indicating the specified quality may be designated by the base station device 50. Moreover, the synchronization signal or the CSI-RS to be used for the measurement may be designated by the base station device 50.

Specifically, if the terminal device 10 exists within the cell of the distributed node (DU) "DU #0" (where the terminal device 10 is connected to the cell formed by the above-mentioned DU) as illustrated in the example in Fig. 12, the decision unit 52 for the base station device 50 designates the Activation with respect to the group with the group index "Index #0" in order to cope with the change between the different cells at the same distributed node. Moreover, if the cell with the cell configuration information "Config #2" is adjacent to the cell of the distributed node (DU) "DU #0" and other cells with the cell configuration information "Config #3" to "Config #6" are not adjacent to the cell of the distributed node (DU) "DU #0," the decision unit 52 for the base station device 50 designates the Activation with respect to the group with the group index "Index #1" and also designates the Deactivation with respect to the groups with the group indexes "Index #2" and "Index #3."

Moreover, if the terminal device 10 moves and the terminal device 10 attempts to move into the cell of the distributed node (DU) "DU #1," for example, into the cell with the cell configuration information "Config #2" as in the example illustrated in Fig. 12, the decision unit 52 for the base station device 50 determines that no cell configuration information corresponding to the same group exists, and designates the Deactivation with respect to the group with the group index "Index #1." On the other hand, if the cells with the cell configuration information "Config #0," "Config #1," and "Config #3" to "Config #6" are adjacent to the cell configuration information "Config #2," the decision unit 52 for the base station device 50 designates the Activation with respect to the groups with the group indexes "Index #0," "Index #2," and "Index #3."

Furthermore, if the terminal device 10 moves and the terminal device 10 attempts to move into the cell of the distributed node (DU) "DU #2" as in the example illustrated in Fig. 12, the decision unit 52 for the base station device 50 designates the Activation with respect to the group with the group index "Index #3" in order to cope with the change between the different cells at the same distributed node. Moreover, if the cell with the cell configuration information "Config #2" is adjacent to the cell of the distributed node (DU) "DU #2" and other cells with the cell configuration information Config #0," "Config #1," "Config #3," and "Config #4" are not adjacent to the cell of the distributed node (DU) "DU #2," the decision unit 52 for the base station device 50 designates the Activation with respect to the group with the group index "Index #1" and also designates the Deactivation with respect to the groups with the group indexes "Index #0" and "Index #2."

Incidentally, if the mobility event has occurred and the base station device 50 in the second example reports the L1/L2 signaling corresponding to the cell change (Inter-DU cell Change) between the different distributed nodes, particularly, if the base station device 50 notifies the terminal device 10 of the activation (Activation), it may also notify the terminal device 10 of the radio resource information (the cell configuration information), like a dedicated RA preamble, to be used for the mobility event at the same time.

Moreover, if the mobility event has occurred, the terminal device 10 in the second example and the decision unit 52 for the base station device 50 may keep the activation of only the cell configurations of the same group (Activate) and deactivate the cell configurations of other groups (Deactivate). In this case, when the decision unit 52 for the base station device 50 deactivates the cell configurations of a certain group (Deactivate), it may notify the terminal device 10 of a deactivation timer. The deactivation timer may be activated at the same time as the completion of the mobility event or may be reactivated based on the L1/L2 signaling (particularly, the MAC-CE) from the base station device 50. Moreover, if the cell configuration information of the deactivated group (Deactivation) includes an individual parameter(s) such as the dedicated RA preamble, the terminal device 10 in the second example may release (Delete, Release) the relevant cell configuration information. Only the related parameter(s) may be released or the entire cell configuration information may be released (Release). Moreover, the group(s) which enters into a null state where the cell configuration information to which it belongs no longer exists as a result of the release, may be deleted autonomously by the terminal device 10 in the second example or may be deleted explicitly by the base station device 50.

In the second example, the terminal device 10 does not have to be aware of the type of each group. The terminal device 10 may manage the cell configuration information based on the decision (control) of the Activation/Deactivation designated by the decision unit 52 for the base station device 50 regarding each group.

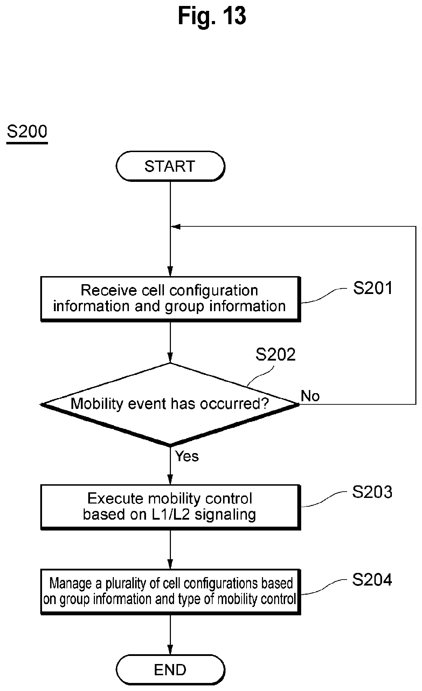

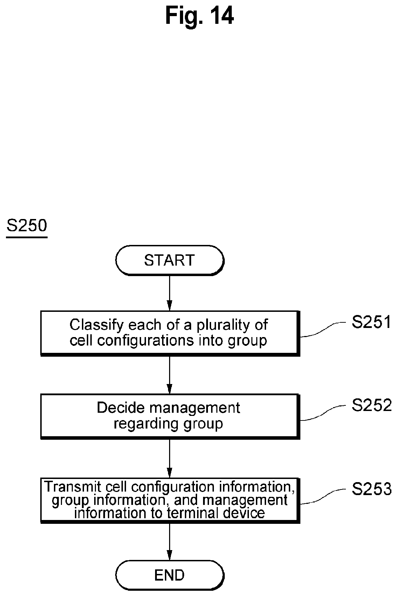

Next, processing sequences performed by the terminal device and the base station device according to an embodiment will be described with reference to Figs. 13 and 14. Fig. 13 is a flowchart for explaining an example of a processing sequence performed by the terminal device 10 according to an embodiment. Fig. 14 is a flowchart for explaining an example of a processing sequence performed by the base station device 50 according to an embodiment. Incidentally, referring to Fig. 13, an explanation will be provided about the processing sequence of the terminal device 10 in the first example regarding the processing sequence performed by the radio communication system; and referring to Fig. 14, an explanation will be provided about the processing sequence of the base station device 50 in the second example regarding the processing sequence performed by the radio communication system.

In the following description, it is assumed that the establishment of the RRC connection has been completed in advance between the terminal device 10 and the base station device 50 and that they are in the connected state (RRC Connected) by using a specified frequency band.

### (Processing Sequence of Terminal Device)

Referring to Fig. 13, the reception unit 11 firstly receives the cell configuration information about the cell configurations and the group information about the group(s) of the cell configurations from the base station device 50 (S201).

Next, the terminal device 10 judges whether a mobility event has occurred or not (S202). Practically, the judgment of the occurrence of the mobility event is performed by the base station device 50. So, the terminal device 10 judges the occurrence of the mobility event based on whether the L1/L2 signaling has been received from the base station device 50 or not, and based on the mobility event information which can be included in the L1/L2 signaling. Then, steps S201 and S202 are repeated until it is determined that the mobility event has occurred.

If it is determined as a result of the judgment in step S202 that the mobility event has occurred, the execution unit 14 executes the mobility control based on the L1/L2 signaling with respect to the base station device 50 (step S203).

Next, the management unit 15 manages the plurality of the cell configurations based on the group information received in step S201 and the type of the mobility control executed in step S203 (step S204). The plurality of the cell configurations are managed with respect to each group to which each of the cell configurations belongs.

### (Processing Sequence of Base Station Device)

Referring to Fig. 14, the classification unit 51 firstly classifies each of the plurality of the cell configurations into a group based on the cell type (S251). The cell type is based on, for example, the relationship between the cell of the relevant cell configuration and the cell which exists in the service area.

Next, the decision unit 52 decides the management regarding the group of the relevant cell configuration (S252).

Then, the transmission unit 53 transmits the cell configuration information, the group information, and the management information to the terminal device 10 (S253). The cell configuration information, the group information, and the management information may be transmitted respectively at different timings or may be transmitted together at the same timing as described earlier.

Incidentally, the sequential order of the sequences and the flowcharts described in this embodiment may be changed as long as no contradiction occurs in the processing.

Moreover, the processing explained in this embodiment may be implemented by hardware of the device or may be implemented by the processor by executing the relevant program stored in the storage apparatus. When executing a program, the program may be stored in a storage medium. The storage medium storing the relevant program may be a non-transitory computer-readable storage medium. The non-transitory storage medium is not particularly limited, but may be, for example, a storage medium such as a USB memory or a CD-ROM.

The exemplary embodiment of the present invention has been described above. When the terminal device 10 and the radio communication method according to this embodiment are employed, the plurality of the cell configurations are managed based on the group information and the type of the mobility control. Accordingly, it becomes possible to manage the plurality of the cell configurations with respect to each group to which each of the above cell configurations belongs according to the type of the executed mobility control. Consequently, the cell configurations can be managed appropriately as compared to conventional technologies. Therefore, the technology according to this embodiment can contribute to the achievement of Goal 9 of the Sustainable Development Goals (SDGs), which aims to "build resilient infrastructure, promote inclusive and sustainable industrialization and foster innovation."

Moreover, when the base station device 50 according to this embodiment is employed, the cell configuration information, the group information, and the management information are transmitted to the terminal device 10. Accordingly, it becomes possible to cause the terminal device 10 to manage the plurality of the cell configurations with respect to each group to which each of the cell configurations belongs in accordance with the decided management. Therefore, the cell configurations can be managed appropriately as compared to conventional technologies.

Incidentally, the above-described embodiment(s) is intended to facilitate understanding of the present invention and is not intended to interpret the present invention in a limited manner. The present invention can be changed/improved without departing from the gist thereof and the invention also includes its equivalents. Specifically speaking, each embodiment which is appropriately changed by those skilled in the art is also included within the scope of the present invention as long as they have the features of the invention. For example, the respective elements included in the embodiment(s) and their arrangement, materials, conditions, shapes, sizes, etc. are not limited to those illustrated in the examples and can be changed appropriately. Moreover, the respective embodiments are illustrative only and it goes without saying that partial substitutions or combinations of configurations indicated in different embodiments can be possible, and they are also within the scope of the present invention as long as they include the features of the present invention.
1. A terminal device for performing radio communication with a base station device, the terminal device comprising:
   a reception unit that receives cell configuration information about cell configurations and group information indicating a group of the cell configurations from the base station device;
   an execution unit that executes mobility control based on L1/L2 signaling; and
   a management unit that manages a plurality of the cell configurations based on the group information and a type of the mobility control executed by the execution unit.
2. The terminal device according to clause 1,
   wherein the management unit retains or releases a plurality of pieces of the cell configuration information based on the group information and the type of the mobility control executed by the execution unit.
3. The terminal device according to clause 1,
   further comprising a measurement unit that measures wireless communication quality between cells with the cell configurations,
   wherein the management unit manages the plurality of the cell configurations based on the group information and the type of the mobility control as well as a result of the measurement by the measurement unit.
4. A base station device for performing radio communication with a terminal device,
   the base station device comprising:
   a classification unit that classifies each of a plurality of cell configurations into a group based on a cell type;
   a decision unit that decides management regarding the group; and
   a transmission unit that transmits cell configuration information about the cell configurations, group information indicating the group, and management information about the management regarding the group to the terminal device.
5. The base station device according to clause 4,
   wherein the management information includes activation information for activating the cell configurations belonging to the group or deactivation information for deactivating the cell configurations belonging to the group.
6. The base station device according to clause 4,
   wherein the decision unit decides the management regarding the group when mobility control based on L1/L2 signaling occurs at the terminal device.
7. A radio communication method used for a terminal device for performing radio communication with a base station device,
   the radio communication method comprising:
   receiving cell configuration information about cell configurations and group information indicating a group of the cell configurations from the base station device;
   executing mobility control based on L1/L2 signaling; and
   managing a plurality of the cell configurations based on the group information and a type of the executed mobility control.

### REFERENCE SIGNS LIST

- 10, 10-1, 10-2, 10-m: terminal device
- 11: reception unit
- 12: measurement unit
- 13: transmission unit
- 14: execution unit
- 15: management unit
- 21: processor
- 22: memory
- 23: storage apparatus
- 24: communication apparatus
- 25: input apparatus
- 26: output apparatus
- 27: antenna
- 50, 50-1, 50-n: base station device
- 51: classification unit
- 52: decision unit
- 53: transmission unit
- 90: core network apparatus
- 100: radio communication system

## Claims

1. A terminal device (10) for performing radio communication with a base station device (50),
the terminal device (10) comprising:
a reception unit (11) that receives cell configuration information about cell configurations and group information indicating a group of the cell configurations from the base station device (50);
an execution unit (14) that executes mobility control based on L1/L2 signaling; and
a management unit (15) that manages a plurality of the cell configurations based on the group information and a type of the mobility control executed by the execution unit (14).

2. The terminal device (10) according to claim 1,
wherein the management unit (15) retains or releases a plurality of pieces of the cell configuration information based on the group information and the type of the mobility control executed by the execution unit (14).

3. The terminal device (10) according to claim 1,
further comprising a measurement unit (12) that measures wireless communication quality between cells with the cell configurations,
wherein the management unit (15) manages the plurality of the cell configurations based on the group information and the type of the mobility control as well as a result of the measurement by the measurement unit (12).

4. A base station device (50) for performing radio communication with a terminal device (10),
the base station device (50) comprising:
a classification unit (51) that classifies each of a plurality of cell configurations into a group based on a cell type;
a decision unit (52) that decides management regarding the group; and
a transmission unit (53) that transmits cell configuration information about the cell configurations, group information indicating the group, and management information about the management regarding the group to the terminal device (10).

5. The base station device (50) according to claim 4,
wherein the management information includes activation information for activating the cell configurations belonging to the group or deactivation information for deactivating the cell configurations belonging to the group.

6. The base station device (50) according to claim 4,
wherein the decision unit (52) decides the management regarding the group when mobility control based on L1/L2 signaling occurs at the terminal device (10).

7. A radio communication method used for a terminal device (10) for performing radio communication with a base station device (50),
the radio communication method comprising:
receiving cell configuration information about cell configurations and group information indicating a group of the cell configurations from the base station device (50);
executing mobility control based on L1/L2 signaling; and
managing a plurality of the cell configurations based on the group information and a type of the executed mobility control.
